(19) Europäisches Patentamt
European Patent Office
Office européen des brevets

(11) Numéro de publication : 0 283 330 B1

(12) # FASCICULE DE BREVET EUROPEEN

(45) Date de publication du fascicule du brevet : **17.04.91 Bulletin 91/16**

(51) Int. Cl.$^5$ : **C08G 73/10,** C08G 73/12

(21) Numéro de dépôt : **88400228.8**

(22) Date de dépôt : **02.02.88**

(54) **Compositions de polybenzhydrolimides terminées par des groupements à insaturation éthylénique.**

Le dossier contient des informations techniques présentées postérieurement au dépôt de la demande et ne figurant pas dans le présent fascicule.

(30) Priorité : **13.02.87 FR 8701983**

(43) Date de publication de la demande : **21.09.88 Bulletin 88/38**

(45) Mention de la délivrance du brevet : **17.04.91 Bulletin 91/16**

(84) Etats contractants désignés : **BE CH DE GB IT LI NL**

(56) Documents cités :
**EP-A- 0 077 718**
**EP-A- 0 090 927**
**FR-A- 1 537 135**
**US-A- 3 939 109**
**US-A-37 451 49**

(73) Titulaire : **CENTRE D'ETUDE DES MATERIAUX ORGANIQUES POUR TECHNOLOGIES AVANCEES**
**Autoroute Lyon-Vienne Echangeur de Solaize**
**Vernaison Solaize**
**F-69390 Vernaison (FR)**

(72) Inventeur : **Malinge, Jean**
**6, Allée Ho Chi Minh**
**F-69700 Givors (FR)**
Inventeur : **Rabilloud, Guy**
**27, Boulevard Clémenceau**
**F-38100 Grenoble (FR)**
Inventeur : **Sillion, Bernard**
**93, rue Juliot Curie**
**F-69005 Lyon (FR)**

(74) Mandataire : **Colas des Francs, Jean**
**Institut Français du Pétrole 4, Avenue de Bois Préau**
**F-92502 Rueil-Malmaison (FR)**

EP 0 283 330 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet de nouvelles compositions de polybenzhydrolimides terminées par des groupes insaturés éthyléniques. Ces compositions présentent l'avantage d'être solubles, sous une forme totalement imidée, dans un grand nombre de solvants organiques. De plus, les solutions formées à partir de ces compositions ont une excellente stabilité au stockage, elles sont dépourvues d'amines aromatiques libres, qui sont des produits cancérogènes, et, après évaporation du ou des solvants, elles sont fusibles et, au-dessus d'une certaine température, thermodurcissables. Ces compositions peuvent être employées comme liants dans la fabrication des matériaux composites, comme bases pour l'élaboration de compositions adhésives, de mousses et matériaux cellulaires. Elles se prêtent également à la fabrication d'objets moulés ou à la formation de revêtements isolants.

L'invention concerne plus particulièrement des compositions de polybenzhydrolimides obtenues en faisant réagir au moins une diamine aromatique avec l'acide benzhydroltétracarboxylique-3,3',4,4'ou un bis(ortho-acide-ester) ou un tétraester dérivés de cet acide benzhydroltétracarboxylique-3,3',4,4' et un anhydride ou un acide-ester ou un diester dérivé d'un acide dicarboxylique insaturé. Cette réaction est effectuée à une température suffisamment élevée pour qu'il y ait formation des compositions de polybenzhydrolimides par condensation des fonctions amine sur les groupements réactifs provenant des réactifs à fonction acides, anhydrides et/ou esters.

L'invention concerne également les polyimides réticulés qui sont formés lors du chauffage desdites compositions de polybenzhydrolimides à une température comprise entre 200°C et 350°C. Elle concerne aussi l'utilisation des compositions de polybenzhydrolimides thermodurcissables pour fabriquer des matériaux composites, des adhésifs, des objets moulés ou des revêtements protecteurs capables de résister à des températures élevées.

Les résines de polyimides aromatiques se caractérisent par d'excellentes propriétés physiques et chimiques et en particulier par une très bonne résistance à la chaleur et à l'oxydation. De ce fait, elles sont utilisées dans de nombreuses applications pour fabriquer des films, des vernis ou des revêtements résistants aux hautes températures. Mais les polyimides aromatiques sont généralement des polymères infusibles et peu ou pas solubles dans les solvants organiques. Pour cette raison, il faut employer des techniques de mise en oeuvre qui passent soit par l'intermédiaire d'un polymère soluble non cyclisé, soit par un mélange de réactifs fusibles qui, par un traitement thermique approprié, peut donner un matériau polymère.

La méthode de synthèse la plus générale consiste à préparer dans une première étape un polyamide-acide soluble en faisant réagir le dianhydride d'un acide aromatique tétracarboxylique avec une diamine aromatique dans un solvant aprotique polaire. Ces polymères linéaires intermédiaires peuvent être des composés macromoléculaires de haute masse moléculaire si les réactifs sont employés en proportions proches de la stoechiométrie. Mais ils peuvent être également des oligomères de faible masse moléculaire si l'on utilise un excès de l'un ou l'autre des réactifs ; dans ce cas, les groupes fonctionnels de fin de chaîne sont ensuite mis en réaction avec des composés possédant une réactivité latente.

Ces deux types de polymères précurseurs de polyimides aromatiques présentent cependant les mêmes inconvénients, dus en particulier à l'insolubilité de la forme imide et à l'instabilité de la forme amide-acide. Les polyamide-acides sont en effet très sensibles à la chaleur et à l'humidité, ce qui nécessite une conservation à basse température, de préférence inférieure à 5°C, en atmosphère anhydre et de préférence sous gaz inerte. Les résines de polyamide-acides sont transformées en polyimides par une réaction de cyclodéshydratation thermique ou chimique qui est effectuée au moment de la mise en oeuvre. La réaction de cyclisation se produit par exemple lorsque le film humide de polyamide-acide est chauffé progressivement depuis la température ambiante jusqu'à 300°C ou 350°C. Il y a d'une part évaporation du solvant et d'autre part élimination de l'eau provenant de la réaction de déshydratation qui conduit aux cycles imides. D'une façon générale, ce traitement thermique doit être progressif et il dure plusieurs heures, par exemple de 5 à 15 heures, pour éviter la formation de bulles ou de défauts importants dans la masse du matériau. L'ensemble de ce processus explique que les polyamide-acides ne se prêtent pas aisément à la fabrication de pièces épaisses comme les matériaux composites ou les objets moulés dans lesquelles la diffusion du solvant ou de l'eau de réaction est très difficile, sinon impossible.

On sait qu'il existe des résines de polyimides aromatiques de haute masse moléculaire qui sont solubles dans les solvants organiques parce que les polymères qui les constituent ont des structures dissymétriques ou portant des groupes latéraux volumineux, mais ces résines ne sont pas fusibles même si leur température de transition vitreuse est inférieure à 300°C. En effet, pour fabriquer des matériaux composites, il faut qu'au moment de la mise en oeuvre, la résine qui va servir de liant passe par un stade assez fluide pour mouiller aussi parfaitement que possible le support en fibres, tissus ou charges. Il faut aussi que sa viscosité à l'état fondu permette de contrôler les différents paramètres du moulage sous pression.

L'une des approches proposée dans le brevet US 3.528.950 est de préparer un prépolymère de faible masse moléculaire en faisant réagir une diamine aromatique avec un dianhydride d'acide aromatique tétracarboxylique et un monoanhydride d'acide dicarboxylique cycloaliphatique insaturé. La réaction est effectuée par chauffage de ces trois réactifs dans un solvant organique polaire avec distillation de l'eau de réaction. Mais cette méthode fournit deux sortes de polymères ayant des masses moléculaires très différentes et qui sont isolés séparément. Les polymères de plus haute masse précipitent dans le milieu réactionnel et les autres sont précipités ultérieurement. Après séchage, les deux produits sont mélangés sous forme de poudre et mis en forme par pressage à une température comprise entre 200°C et 350°C, température à laquelle il y a réticulation des oligomères imide par réaction de polymérisation des doubles liaisons éthyléniques constituant les fins de chaînes. Cette méthode présente l'avantage d'éliminer les problèmes d'instabilité des solutions de polyamide-acides, mais elle nécessite une étape supplémentaire pour isoler les deux types de polymères et les remélanger entre eux. En outre, ces oligomères ne sont pas solubles en toutes proportions dans les solvants organiques.

Une autre technique qui semble particulièrement intéressante est proposée dans le brevet US 3.745.149, selon laquelle une composition est préparée en mélangeant un diester ou un tétraester d'acide aromatique tétracarboxylique avec une diamine aromatique et un monoester ou un diester d'acide cycloaliphatique dicarboxylique insaturé. Ces trois réactifs sont mis en solution dans un solvant organique ayant une température d'ébullition assez basse, comme par exemple le méthanol, et cette solution des monomères est utilisée pour l'imprégnation des fibres ou des tissus qui constituent l'armature des matériaux composites.

Après évaporation de la plus grande partie du solvant, la réaction de formation des oligomères imides est effectuée par polycondensation des réactifs au moment de la mise en oeuvre des matériaux. L'avantage de cette méthode est de mettre en jeu un système formé de réactifs fusibles, solubles et d'une mise en oeuvre compatible avec les moyens techniques actuels. Tous ces éléments font que ces résines dites PMR (pour "polymérisation des monomères réactifs") connaissent actuellement un développement important.

Il faut cependant remarquer qu'à côté de leurs avantages indéniables, les résines de ce type présentent aussi des inconvénients liés à leur méthode de préparation. Les points qui paraissent les plus importants sont les suivants :

– Les solutions de monomères et les pré-imprégnés préparés à partir de ces solutions ne sont pas stables et il y a une évolution dans le temps des caractéristiques des produits. Il est donc indispensable de les conserver à basse température et de préférence à l'abri de l'humidité.

– Les solutions de monomères et les pré-imprégnés préparés à partir de ces solutions contiennent une quantité importante de diamines aromatiques libres qui sont connues pour être des produits fortement cancérogènes. La mise en oeuvre de ces produits nécessite donc des protections à tous les niveaux pour éviter l'expositon des utilisateurs à ces diamines.

– La fabrication des matériaux composites est réalisée directement à partir de tissus préimprégnés par le mélange des réactifs en utilisant un programme de chauffage et de mise en pression très difficile à contrôler. Ce programme est en effet destiné à réaliser la réaction d'oligomérisation qui se produit avec départ d'une quantité importante de produits volatils (eau et alcool), à achever le séchage du préimprégné et à assurer un fluage de la résine avant la polymérisation des groupements éthyléniques.

On peut également citer le brevet FR-A-1537 135, qui décrit des polyimides réticulés obtenus par déshydratation cyclisante et polymérisation de polyamides-acides terminés par des restes d'acide dicarboxylique insaturé pouvant former un anhydride interne, ces polyamides-acides étant eux-mêmes préparés en faisant réagir, entre 20 et 120°C, dans un solvant polaire anhydre, un dianhydride avec un excès de diamine biprimaire et en faisant réagir, entre 0 et 100°C, la solution ainsi obtenue avec un monoanhydride d'acide dicarboxylique insaturé.

On connaît la demande de brevet européen publiée EP-A-0077 718, qui décrit des compositions de polyimides aromatiques présentant notamment une solubilité élevée dans divers solvants organiques. Elles sont obtenues par réaction d'une diamine aromatique avec un tétra-ester ou un diacide-diester dérivé de l'acide benzydrol tétracarboxylique 3, 3', 4, 4', la réaction étant poursuivie jusqu'à l'obtention d'une viscosité inhérente (à 30°C pour une concentration de 5 g/litre dans la N-méthylpyrrolidone) de 0,1 à 2 dl/g.

On a découvert, et c'est l'un des objets de l'invention, que l'utilisation de dérivés de l'acide benzhydroltétracarboxylique-3,3',4,4' pour synthétiser des compositions de polyimides thermodurcissables permettait de pallier tous les inconvénients cités précédemment en séparant effectivement l'étape de formation des oligomères, qui est une réaction de polycondensation, de l'étape de polymérisation. En effet, ces monomères conduisent à des compositions qui, sous une forme totalement imidée, sont très solubles dans de nombreux solvants organiques polaires. La réaction de polycondensation peut donc être réalisée de façon optimale dans un solvant approprié jusqu'à ce qu'il n'y ait pratiquement plus de monomères libres dans le milieu réactionnel. On obtient alors des solutions concentrées, stables dans des solvants autres que les solvants comme la N-méthylpyrrolidone qui, on le sait, s'associent fortement avec les fibres de carbone.

Les compositions fusibles et solubles de poly(benzhydrolimides) terminés par des groupes comportant une insaturation éthylénique selon l'invention peuvent être représentées par la formule générale

(1)

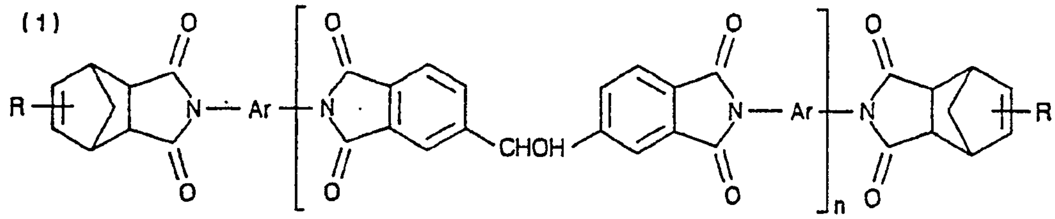

dans laquelle Ar, n et R sont définis comme indiqué plus loin. Ces compositions sont préparées principalement par réaction d'au moins une diamine aromatique primaire de formule générale

$$H_2N - Ar - NH_2 \quad (2)$$

avec au moins un composé aromatique tétracarboxylique de formule générale

(3)

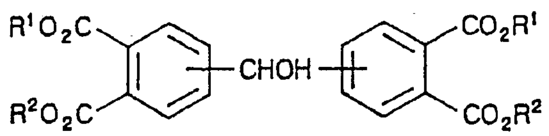

et au moins un composé cycloaliphatique répondant à l'une des formules générales

(4)

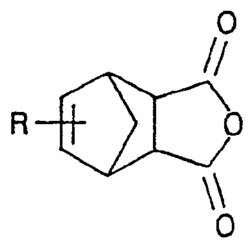

ou

(5)

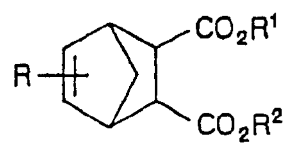

Dans ces formules, le radical Ar est un radical aromatique divalent carbocyclique ou hétérocyclique, dont les deux valences sont sur des atomes de carbone distincts non situés en position ortho l'un par rapport à l'autre. Le radical Ar peut être formé d'un cycle ou de plusieurs cycles, par exemple de deux à six cycles, qui sont alors accolés ou reliés entre eux, chaque cycle étant formé de préférence de cinq à sept atomes dont une partie peut consister en atomes d'oxygène, de soufre et/ou d'azote.

Lorsque le radical Ar comporte plusieurs cycles reliés entre eux, les éléments de liaison sont par exemple la liaison simple ou l'un des atomes ou groupements suivants :
$-O-$ ;$-S-$ ;$-SO-$ ;$-SO_2-$ ;$-CH_2-$ ;$-CF_2-$ ;$-C(CH_3)_2-$ ;$-C(CF_3)_2-$ ;$-CO-$ ;$-COO-$ ; $-CHOH-$ ;$-CONH-$.

$R^1$ et $R^2$, identiques ou différents, sont des radicaux monovalents substantiellement hydrocarbonés renfermant de préférence chacun de un à treize atomes de carbone, par exemple alcoyles inférieurs, cycloalcoyles ou aryles. Dans ce cas, le composé de formule (3) est un tétraester ou un mélange de tétraesters de l'acide benzhydroltétracarboxylique-3,3',4,4' et le composé de formule (5) est un diester ou un mélange de diesters d'un acide cycloaliphatique insaturé dicarboxylique. Le radical $R^1$ peut également représenter un atome d'hydrogène, $R^2$ étant défini comme ci-dessus, et le composé de formule (3) représente alors au moins un bis(ortho-acide-ester), appelé plus simplement diester de l'acide benzhydroltétracarboxylique-3,3'4,4', tandis que le composé de formule (5) représente au moins un acide-ester, ou monoester, dérivé d'un acide dicarboxylique insaturé. Dans le composé de formule (3), $R^1$ et $R^2$ peuvent être tous deux des atomes d'hydrogène et le produit est alors l'acide benzhydrol tétracarboxylique-3,3',4,4'.

Dans la formule (3), les valences du groupement alcool secondaire qui sépare les deux cycles aromatiques du benzhydrol sont placées au milieu des liaisons carbone-carbone de ces cycles pour indiquer la présence de différents isomères de position dans le cas où le produit est un bis(ortho-acide-ester) ou un tétraester dissymétrique.

Dans les formules (1), (4) et (5), R représente un atome d'hydrogène ou un radical hydrocarboné monovalent, par exemple un groupe phényle ou un radical alcoyle renfermant de un à quatre atomes de carbone et de préférence un groupe méthyle.

Dans la formule (1), n est un nombre entier qui représente le degré de polycondensation de la chaîne principale des poly(benzhydrolimides) aromatiques. La masse moléculaire de ces compositions de poly(benzhydrolimides) terminés par des groupes réactifs éthyléniques peut être ajustée en faisant varier les proportions des différents réactifs, tout en respectant la stoechiométrie globale entre les fonctions amine et les groupes antagonistes acide ou ester.

La valeur exacte du nombre n n'est pas directement accessible car les compositions de l'invention sont formées d'un mélange d'oligomères dont les masses moléculaires sont statistiquement distribuées autour d'une valeur moyenne qui est fixée par les proportions respectives des divers réactifs et par la méthode de synthèse employée. L'examen de la formule générale (1) montre que la valeur moyenne du nombre n peut être facilement calculée à partir des quantités de réactifs utilisées puisque pour n moles de composé de formule (3), il faut (n+1) moles de diamine aromatique primaire (2) et deux moles de composé (4) ou (5).

Parmi les diamines aromatiques primaires de formule (2) qui conviennent pour la présente invention, on peut citer la benzènediamine-1,3, la benzènediamine-1,4, la méthylènebis(benzèneamine)-3,3', la méthylènebis(benzèneamine)-4,4, l'oxybis(benzèneamine)-3,3, l'oxybis(benzèneamine)-4,4, la thiobis(benzèneamine)-3,3'la thiobis(benzèneamine)-4,4', la sulfonylbis(benzèneamine)-3,3', la sulfonylbis (benzèneamine)-4,4', la bis(amino-3 phényl) cétone, la bis(amino-4 phényl) cétone, le diamino-3,3' benzhydrol, le diamino-4,4' benzhydrol, le bis(amino-4 phényl)-2,2 propane, le diamino-4,4' biphényle, le diamino-4,4' diméthoxy-3,3' biphényle, le diamino-3,3' benzanilide, le diamino-3,4' benzanilide, le diamino-4,4' benzanilide, le diamino-3'4 benzanilide, le diamino-3,3' benzoate de phényle, le diamino-4,4' benzoate de phényle, le bis(amino-4 phényl) diméthylsilane, le bis(amino-4 phényl)-1,2 tétraméthyldisiloxane, le bis(amino-4 phénoxy)-1,4 benzène, le bis(amino-3 phénoxy)-1,3 benzène et le bis((amino-4 phénoxy)-4) phényl)-2,2 propane.

Parmi les composés de formule (3) qui conviennent pour la présente invention, on peut citer l'acide benzhydrol tétracarboxylique-3,3',4,4', les bis(ortho-acide-esters) de cet acide, comme le diester de méthyle, le diester d'éthyle, le diester de n-propyle, le diester d'isopropyle, le diester de n-butyle, le diester d'isobutyle, le diester d'amyle, le diester d'hexyle, le diester d'hydroxy-2 éthyle et le diester de trifluoroéthyle, les tétraesters comme l'ester de tétraméthyle, l'ester de tétraéthyle, l'ester de tétrabutyle, l'ester de tétraphényle, l'ester de diméthyle diphényle et l'ester de diéthyle diphényle.

Dans le cas le plus général, les diesters et les tétraesters dissymétriques de l'acide benzhydrol tétracarboxylique-3,3',4,4' ne sont pas des composés purs mais un mélange d'isomères. Par exemple le diester de méthyle peut être un mélange en proportions variables de dicarboxy-3,3' diméthoxycarbonyl-4,4' benzhydrol, de dicarboxy-4,4' diméthoxycarbonyl-3,3' benzhydrol et de dicarboxy-3,4' diméthoxycarbonyl-4,3' benzhydrol.

Parmi les composés de formules (4) et (5) utilisables dans la présente invention, on peut citer les anhydrides des acides bicyclo(2,2,1)heptène-5 dicarboxylique-2,3 et méthyl-5 bicyclo(2,2,1)heptène-5 dicarboxylique-2,3, les monoesters de ces acides comme l'ester de méthyle, l'ester d'éthyle, l'ester de n-propyle, l'ester d'isopropyle, l'ester de n-butyle, l'ester d'isobutyle, l'ester d'amyle, l'ester d'hexyle, l' ester d'hydroxy-2 éthyle et l'ester de trifluoroéthyle, les diesters de ces acides comme le diester de méthyle, le diester d'éthyle, le diester de n-propyle, le diester d'isopropyle, le diester de n-butyle, le diester d'isobutyle, le diester d'amyle, le diester d'hexyle, le diester d'hydroxy-2 éthyle, le diester de phényle et le diester de trifluoroéthyle.

Les compositions de poly(benzhydrolimides) à terminaisons éthyléniques de l'invention peuvent être préparées en mélangeant dans un solvant organique approprié les trois réactifs de base qui sont une diamine aromatique diprimaire de formule (2), un composé de formule (3) dérivé de l'acide benzhydroltétracarboxylique-3,3',4,4' et un composé cycloaliphatique de formule (4) ou (5) en employant des proportions respectives qui dépendent de la masse moléculaire moyenne désirée.

Pour la plupart des applications, cette masse moléculaire moyenne est ajustée pour que la température de fusion ou de ramollissement des compositions de l'invention soit située par exemple entre 150°C et 300°C et de préférence entre 150°C et 250°C. En effet, la polymérisation thermique des doubles liaisons éthyléniques terminales doit être de préférence réalisée lorsque les compositions de l'invention sont portées à une température supérieure à leur température de fusion ou de ramollissement. Les températures de fusion indiquées ci-dessus, c'est à dire comprises entre 150°C et 250°C, sont obtenues lorsque les compositions de poly(benzhydrolimides) de l'invention ont une masse moléculaire moyenne en nombre comprise entre 1000 et 1000 grammes par mole et de préférence entre 1000 et 3000 grammes par mole.

Le mélange réactionnel est ensuite chauffé à une température avantageusement supérieure à 80°C, de préférence comprise entre 100 et 250°C, jusqu'à ce que la réaction de polycondensation et la réaction de formation des cycles imide soient achevées.

Les solvants utilisables pour préparer les compositions de poly(benzhydrolimides) à terminaisons éthyléniques de l'invention sont de préférence des composés organiques polaires, c'est à dire renfermant un hétéroatome tel que O, N, S, P, Cl, inertes vis à vis des monomères et des polymères. Parmi ces solvants on peut citer les phénols, comme le phénol, les crésols, les xylénols, les chlorophénols, les éthers comme l'anisole, les mono et diéthers de glycols, comme par exemple ceux de l'éthylèneglycol, du diéthylèneglycol, du triéthylène glycol, des propylèneglycols, du butanediol-1,4, les mono et diesters de ces mêmes glycols, les éther-esters de ces glycols, les amides, comme par exemple le méthylformamide, le diméthylformamide" le méthylacétamide, le diméthylacétamide, l'hexaméthylphosphoramide, les urées, comme par exemple la tétraméthylurée, les composés hétérocycliques, comme par exemple la pyridine, la quinolèine, le dioxanne, le tétrahydrofuranne, la N-méthyl pyrrolidinone-2, la N-cyclohexyl pyrrolidinone-2, la N-acétyl pyrrolidinone-2, la tétraméthylène sulfone, les sulfones et les sulfoxydes, comme par exemple la diméthylsulfone ou le diméthylsulfoxyde.

Ces solvants peuvent être utilisés seuls ou mélangés entre eux, ou encore en mélange avec d'autres composés organiques liquides quine sont pas de solvants des polymères mais peuvent jouer le rôle de diluants pour ajuster les propriétés viscosimétriques des solutions. Parmi ces composés on peut citer les alcools, comme le méthanol, l'éthanol, le propanol-1, le propanol-2, les butanols ou l'alcool benzylique, les cétones, comme par exemple, l'acétone, la butanone-2, la méthyl-4 pentanone-2, la dimétyl-2,4 pentanone-2, la cyclohexanone ou l'acétophénone, les hydrocarbures aromatiques, comme par exemple le benzène, le toluène ou les xylènes, le solvant naphta, les hydrocarbures halogénès, comme par exemple le dichlorométhane, le trichlorométhane, le tétrachloro-1,1,2,2 éthane, les fréons, le chlorobenzène, les dichlorobenzènes ou les chlorotoluènes, les esters aliphatiques et aromatiques des acides aliphatiques et aromatiques, comme par exemple les acétates de méthyle, d'éthyle, d'isopropyle, de butyle, de phényle ou le benzoate de méthyle, des éthers, comme par exemple l'éther de dipropyle, de diisopropyle, de dibutyle ou de diphényle.

La concentration initiale des monomères dans le solvant de réaction n'est pas critique mais elle est en général comprise entre 20% et 80% en poids.

Les compositions de poly(benzhydrolimides) terminés par des groupements à insaturation éthylénique selon l'invention peuvent être soumises à une polymérisation thermique, à une température par exemple de 200 à 350°C, de manière à former des produits réticulés.

Comme déjà indiqué plus haut, les compositions de poly(benzhydrolimides) de l'invention, qui sont thermodurcissables au-dessus d'une certaine température, peuvent encore être utilisées pour fabriquer des matériaux composites, des adhésifs, des objets moulés ou des revêtements protecteurs, en particulier des revêtements isolants, capables de résister à des températures élevées. Pour ces applications, on peut mettre en oeuvre les techniques classiques, bien connues de l'homme de l'art.

L'invention sera décrite de façon plus précise par les exemples spécifiques donnés ci-après, dans lesquels les détails sont donnés à titre illustratif et non limitatif. Dans ces exemples, les réactions de polycondensation sont effectuées de préférence en atmosphère de gaz inerte (azote ou argon) pour éviter l'oxydation des fonctions amine par l'oxygène atmosphérique. La viscosité inhérente des compositions de poly(benzhydrolimides) terminés par des fonctions éthyléniques, exprimée en dl/g, est mesurée à 30°C pour une concentration en poids de 5 grammes de produit dans un litre de N-méthyl pyrrolidinone-2. La viscosité dynamique des solutions est déterminée avec un viscosimètre Haake Rotovisco RV12 équipé d'un système de mesure à cône et plateau à une température de 25°C. Les masses moléculaires moyenne en nombre, lorsqu'elles sont indiquées, sont calculées à partir des proportions respectives de chacun des réactifs. Les températures de transition vitreuse sont mesurées par analyse thermomécanique et par pénétrométrie, en utilisant une vitesse de montée en température de 10°C par minute. L'exemple 1 est donné à titre comparatif.

Exemple 1 (comparatif)

Cet exemple est donné pour mettre en évidence la différence de solubilité des oligomères préparés à partir de composés de l'art antérieur : les diesters de méthyle de l'acide benzophénone tétracarboxylique-3,3',4,4' et des oligomères de la présente invention tels qu'ils sont décrits dans les exemples suivants. Il montre également que les solutions de monomères sont pas stables dans le temps lorsque ces solutions sont conservées à la température ambiante.

Un mélange de 536,62 grammes de diester de méthyle de l'acide benzophénone tétracarboxylique-3,3',4,4', 407,6 grammes de méthylène bis(benzèneamine)-4,4', 261,6 grammes de monoester de méthyle de l'acide méthyl-5 bicyclo(2,2,1)heptène-5 dicarboxylique-2,3 et de 1200 grammes de méthanol est introduit dans un réacteur de 3 litres. Les proportions respectives des divers réactifs indiquées ci-dessus sont calculées pour conduire à un mélange d'oligomères dont la masse moléculaire moyenne en nombre est de l'ordre de 1500. Cette solution est stockée dans un flacon hermétique à la température ambiante pendant deux mois. A la fin de cette période, le mélange réactionnel contient un précipité solide qui s'est formé progressivement. Ce produit

est isolé par filtration et l'analyse chimique montre qu'il s'agit du diimide formé par réaction de deux moles de monoester de méthyle de l'acide méthyl-5 bicyclo(2,2,1)heptène-5, dicarboxylique-2,3 avec une mole de méthylène bis(benzèneamine)-4,4'.

Un mélange en tous points identique au précédent est préparé en remplaçant le méthanol, utilisé comme solvant, par 1000 grammes de diglyme. La solution est, sous agitation, chauffée progressivement jusqu'à 140°C, mais dès que la température interne atteint une valeur de 100°C, les oligomères commencent à précipiter dans le milieu réactionnel et, même après addition de 1000 grammes de solvant supplémentaire, la précipitation se poursuit et la réaction d'imidation est réalisée en phase solide. De ce fait, les oligomères imides ne sont pas utilisables pour imprégner des fibres de carbone ou des tissus à base de fibres de carbone ou de verre.

Exemples 2 à 5

Ces exemples décrivent la préparation des compositions de poly(benzhydrolimides) terminés par des groupes réactifs éthyléniques, à partir de mélanges de diester de méthyle de l'acide benzhydroltétracarboxylique-3,3',4,4', de méthylène bis(benzèneamine)-4,4', de monoester de méthyle de l'acide méthyl-5 bicyclo(2,2,1)heptène-5 dicarboxylique-2,3 et de diglyme utilisé comme solvant. Ces mélanges sont préparés en utilisant les proportions de réactifs indiquées dans le tableau 1 et introduits dans un réacteur de 3 litres.

La solution est chauffée à 140°C et maintenue à cette température pendant 3 heures. Au cours de cette étape de polycondensation et d'imidation, les composés volatils (eau et méthanol) sont éliminés du milieu réactionnel par distillation. La température est ensuite portée à 160°C pendant une heure pour achever la réaction d'imidation.

Les compositions de poly(benzhydrolimides) terminés par des groupes réactifs éthyléniques préparées dans ces réactions sont généralement utilisées sous forme de solutions, telles qu'elles sont obtenues à la fin de la réaction. S'il est nécessaire d'obtenir les oligomères sous forme solide soit pour changer de solvant, soit pour les mettre en oeuvre par moulage, la solution est versée dans de l'eau avec une forte agitation. Le précipité qui se forme est lavé plusieurs fois à l'eau et séché à 100°C, sous vide, pendant plusieurs heures.

TABLEAU 1

| Exemple N° | Poids en grammes de Diester | Monoester | Diamine | Mn* | n* | Viscosité inhérente (dl/g) |
|---|---|---|---|---|---|---|
| 2 | 406,67 | 392,40 | 405,80 | 1000 | 1,05 | 0,07 |
| 3 | 537,20 | 261,60 | 406,40 | 1500 | 2,08 | 0,10 |
| 4 | 641,50 | 156,90 | 406,80 | 2500 | 4,13 | 0,17 |
| 5 | 719,90 | 78,50 | 407,24 | 5000 | 9,27 | 0,35 |

*Mn représente la masse moléculaire moyenne en nombre et n le degrés de polycondensation tel qu'il a été défini pour les compositions d'oligomères de formule (1).

Exemple 6

Cet exemple a pour objet de montrer les avantages des compositions de l'invention par rapport à des compositions de l'art antérieur. Une partie de la solution de l'exemple 3 (50 grammes) est versée dans 0,3 litre d'eau fortement agitée à l'aide d'un "ultra-turrax". Le précipité qui s'est formé est mis dans une cartouche d'extraction qui est placée dans un extracteur de Kumagawa. L'eau qui a servi à la précipitation du polymère est utilisée pour effectuer l'extraction des produits hydrosolubles contenus dans la composition d'oligomères.

L'opération est effectuée à la température de 100°C pendant une semaine. Après refroidissement, la solution aqueuse est analysée par spectroscopie dans l'ultraviolet pour déterminer la quantité de méthylène bis(benzèneamine)-4,4' libre. La valeur obtenue est de 0,00024 mole d'amine libre, ce qui correspond, dans la solution mère, à un taux d'amine aromatique inférieur à une partie pour mille. A titre de comparaison, des compositions de monomères selon l'art antérieur contiennent de 18 à 20% en poids de diamine aromatique libre.

Une solution contenant environ 50% en poids de la composition de l'exemple 3 dans le diglyme est conservée à la température ambiante dans les conditions décrites dans l'exemple comparatif 1. Cette solution a une viscosité dynamique de 20 Pa.s et les oligomères ont une viscosité inhérente de 0,11 dl/g. Après deux mois de stockage, la solution est parfaitement limpide et les valeurs indiquées ci-dessus pour la viscosité dynamique et la viscosité inhérente sont inchangées.

Exemple 7

Les solutions de poly(benzhydrolimides) à terminaisons éthyléniques décrites dans les exemples 2, 3 et 4 utilisées pour déposer sur des plaques de verre des films humides ayant une épaisseur de 200 micromètres. Le solvant est évaporé pendant 30 minutes à 100°C et 30 minutes à 200°C. Ces films supportés sur verre sont ensuite étudiés par analyse thermomécanique afin de déterminer la température de transition vitreuse (Tg) des produits. Les résultats obtenus sont indiqués dans le tableau 2

TABLEAU 2

| Composition de l'exemple n° | Mn (calculée) | Tg (°C) |
|---|---|---|
| 2 | 1000 | 170 |
| 3 | 1500 | 210 |
| 4 | 2500 | 240 |

Exemple 8

La solution d'oligomères de poly(benzhydrolimides) de l'exemple 3 est utilisée pour imprégner un feutre de verre. L'échantillon est placé dans un système de mesure placé dans un four thermorégulé. L'une des extrémités de cet échantillon est soumis à une torsion alternée alors que l'autre est reliée à un couplemètre qui permet de suivre l'augmentation de la raideur provoquée par la réticulation thermique des doubles liaisons éthyléniques terminales. Cette étude est menée à différentes températures, en processus isotherme, afin de déterminer un temps de gel du produit à chacune de ces températures. Ce temps de gel est fixé au point de la courbe qui correspond au maximum de la vitesse de polymérisation (point d'inflexion) et les valeurs obtenues sont indiquées dans le tableau 3.

TABLEAU 3

| Température (°C) | Temps de gel (Minutes) |
|---|---|
| 250 | 50 |
| 275 | 45 |
| 300 | 25 |
| 325 | 15 |

**Revendications**

1. Composition polymérique caractérisée en ce qu'elle comprend des chaînes poly(benzhydrolimides) terminées par des groupements à insaturation éthylénique représentées par la formule générale

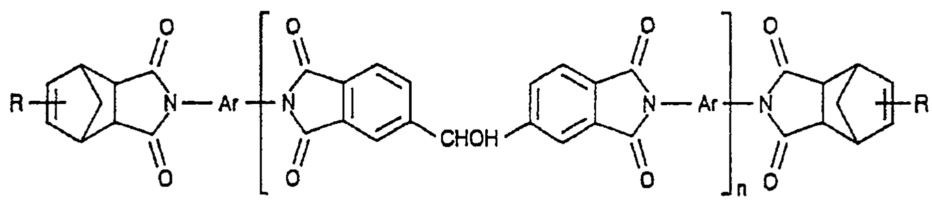

dans laquelle Ar est un radical aromatique divalent, carbocyclique ou hétérocyclique, formé d'un ou de plusieurs cycles, dont les deux valences sont sur des atomes de carbone distincts non situés en position ortho l'un par rapport à l'autre, R représente un atome d'hydrogène ou un radical hydrocarboné monovalent, et le nombre n représente le degré moyen de polycondensation desdites chaînes poly(benzhydrolimides).

2. Composition polymérique selon la revendication 1, caractérisée en ce que R représente un atome d'hydrogène, un radical phényle ou un radical alcoyle de 1 à 4 atomes de carbone.

3. Composition polymérique selon l'une des revendications 1 et 2, caractérisée en ce qu'elle présente un degré de polycondensation correspondant à une masse moléculaire moyenne en nombre de 1000 à 10000.

4. Procédé de préparation d'une composition polymérique selon l'une des revendications 1 à 3, caractérisé en ce que l'on fait réagir dans des conditions d'imidation au moins une diamine aromatique primaire répondant à la formule générale $NH_2$-Ar-$NH_2$ avec au moins un composé aromatique tétracarboxylique de formule générale

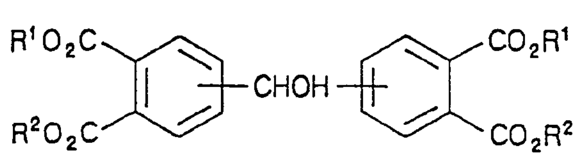

dans laquelle $R^1$ et $R^2$, identiques ou différents, représentent chacun un atome d'hydrogène ou un radical hydrocarboné monovalent, et au moins un composé cycloaliphatique dicarboxylique à insaturation éthylénique

répondant à l'une des formules générales

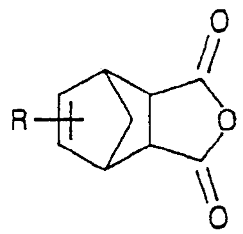

et

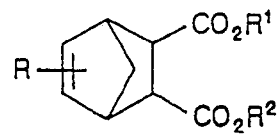

où $R^1$ et $R^2$ sont définis comme ci-dessus, Ar et R étant définis comme dans l'une des revendications 1 et 2.

5. Procédé selon la revendication 4, caractérisé en ce que, $R^1$ et $R^2$ représentant chacun l'atome d'hydrogène, ledit composé aromatique tétracarboxylique est l'acide benzhydroltétracarboxylique - 3,3',4,4'.

6. Procédé selon la revendication 4, caractérisé en ce que, $R^1$ représentant l'atome d'hydrogène et $R^2$ un radical hydrocarboné monovalent de 1 à 13 atomes de carbone, ledit composé aromatique tétracarboxylique est au moins un bis (ortho-acide-ester) d'acide benzhydrol tétracarboxylique -3,3',4,4'.

7. Procédé selon la revendication 4, caractérisé en ce que, $R^1$ et $R^2$représentant chacun un radical hydrocarboné monovalent de 1 à 13 atomes de carbone, ledit composé aromatique tétracarboxylique est au moins un tétraester de l'acide benzhydroltétracarboxylique -3,3',4,4'.

8. Procédé selon l'une des revendications 4 à 7, caractérisé en ce que, le composé cycloaliphatique dicarboxylique à insaturation éthylénique de formule

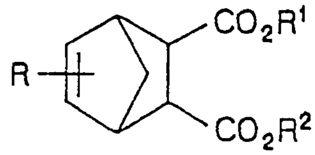

est au moins un acide-ester, $R^1$ représentant l'atome d'hydrogène et $R^2$ un radical hydrocarboné monovalent de 1 à 13 atomes de carbone.

9. Procédé selon l'une des revendications 4 à 7, caractérisé en ce que le composé cycloaliphatique dicarboxylique à insaturation éthylénique de formule

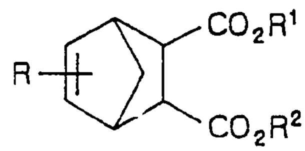

est au moins un diester, $R^1$ et $R^2$ représentant chacun un radical substantiellement hydrocarboné monovalent de 1 à 13 atomes de carbone.

10. Méthode de réticulation d'une composition selon l'une des revendications 1 à 3, caractérisée en ce que ladite composition est soumise à une polymérisation thermique à une température de 200 à 350°C.

11. Utilisation d'une composition polymérique selon l'une des revendications 1 à 3 dans la préparation de matériaux composites, d'adhésifs, d'objets moulés et de revêtements protecteurs.

## Ansprüche

1. Polymere Zusammensetzung, dadurch gekennzeichnet, daß sie Poly (benzhydrolimid) -Ketten mit äthylenisch ungesättigten Endgruppen der allgemeinen Formel

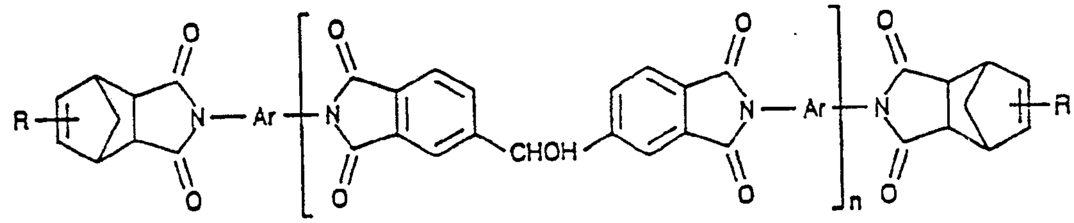

umfaßt, in der Ar ein zweiwertiger aromatischer, carbocyclischer oder heterocyclischer aus ein oder mehreren Zyklen gebildeter Rest ist, deren zwei Valenzen auf verschiedenen nicht in Ortho-Stellung zueinander befindlichen Kohlenstoffatomen sitzen, R ein Wasserstoffatom oder einen einwertigen Kohlenwasserstoffrest bedeutet und die Zahl n den Durchschnittsgrad der Polykondensation der Poly(benzhydrolimid)-Ketten bedeutet.

2. Polymere Zusammensetzung nach Anspruch 1, dadurch gekennzeichnet, daß R ein Wasserstoffatom, einen Phenylrest oder einen Alkylrest mit 1 bis 4 Kohlenstoffatomen bedeutet.

3. Polymere Zusammensetzung nach einem der Ansprüche 1 und 2, dadurch gekennzeichnet, daß sie einen Polykondensations-Grad aufweist, der einer durchschnittlichen molaren Masse der Zahl 1000 bis 10000 entspricht.

4. Verfahren zur Herstellung einer polymeren Zusammensetzung nach einem der Ansprüche 1 bis 3, dadurch gekennzeichnet, daß man unter Imidbildungs-Bedingungen mindestens ein primäres aromatisches Diamin der allgemeinen Formel $NH_2$-Ar-$NH_2$ mit mindestens einer aromatischen Tetracarbonsäure-Verbindung der allgemeinen Formel

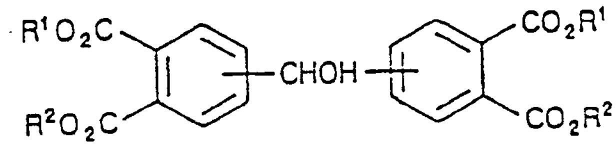

,

in der $R^1$ und $R^2$ gleich oder verschieden voneinander ein Wasserstoffatom oder einen einwertigen Kohlenwasserstoffrest bedeuten, und mit mindestens einer cycloaliphatischen Dicarbonsäure-Verbindung mit äthylenischer Unsättigung entsprechend einer der allgemeinen Formeln

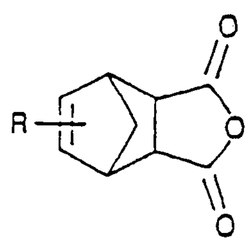

und

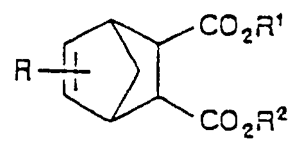

umsetzt, bei denen $R^1$ und $R^2$ die vorstehende Bedeutung haben, während Ar und R die in einem der Ansprüche 1 und 2 angegebene Bedeutung haben.

5. Verfahren nach Anspruch 4, dadurch gekennzeichnet, daß, wenn $R^1$ und $R^2$ ein Wasserstoffatom bedeuten, die aromatische Tetracarbonsäure-Verbindung 3,3',4,4'-Benzhydroltetracarbonsäure ist.

6. Verfahren nach Anspruch 4, dadurch gekennzeichnet, daß, wenn $R^1$ ein Wasserstoffatom und $R^2$ einen einwertigen Kohlenwasserstoffrest mit 1 bis 13 Kohlenstoffatomen bedeuten, die aromatische Tetracarbonsäure-Verbindung mindestens ein Bis-(ortho-Säureester) der 3,3',4,4'-Benzhydroltetracarbonsäure ist.

7. Verfahren nach Anspruch 4, dadurch gekennzeichnet, daß, wenn $R^1$ und $R^2$ einen einwertigen Kohlenwasserstoffrest mit 1 bis 13 Kohlenstoffatomen bedeuten, die aromatische Tetracarbonsäure-Verbindung mindestens ein Tetraester der 3,3',4,4'-Benzhydroltetracarbonsäure ist.

8. Verfahren nach einem der Ansprüche 4 bis 7, dadurch gekennzeichnet, daß die cycloaliphatische Dicarbonsäure-Verbindung mit äthylenischer Unsättigung der Formel

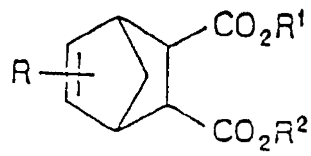

mindestens ein Säureester ist, wenn $R^1$ ein Wasserstoffatom und $R^2$ einen einwertigen Kohlenwasserstoffrest mit 1 bis 13 Kohlenstoffatomen bedeuten.

9. Verfahren nach einem der Ansprüche 4 bis 7, dadurch gekennzeichnet, daß die cycloaliphatische Dicarbonsäure-Verbindung mit äthylenischer Unsättigung der Formel

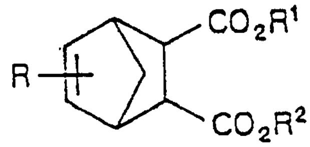

mindestens ein Diester ist, wenn $R^1$ und $R^2$ im wesentlichen einen einwertigen Kohlenwasserstoffrest mit 1 bis 13 Kohlenstoffatomen bedeuten.

10. Verfahren zur Vernetzung einer Zusammensetzung nach einem der Ansprüche 1 bis 3, dadurch gekennzeichnet, daß die Zusammensetzung einer thermischen Polymerisation bei einer Temperatur von 200 bis 350°C unterzogen wird.

11. Verwendung einer polymeren Zusammensetzung nach einem. der Ansprüche 1 bis 3 bei der Herstellung von Verbundwerkstoffen, Bindemitteln, Formpreßteilen und Schutzüberzügen.

## Claims

1. A polymer composition characterized in that it comprises poly(benzhydrolimide) chains ending with ethylenic unsaturated groups represented by the general formula

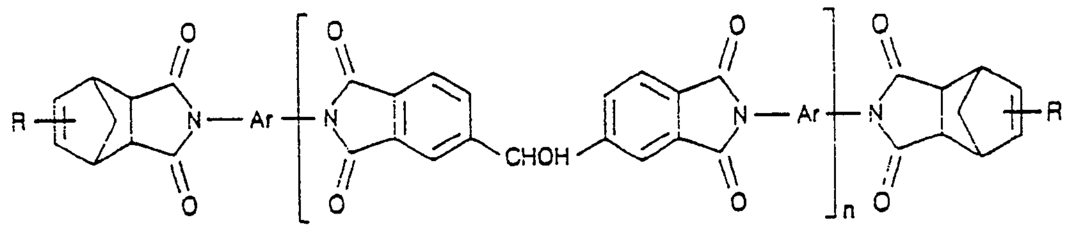

wherein Ar is a divalent aromatic radical, carbocyclic or heterocyclic, formed of one or more rings, the two valences of which are on separate carbon atoms not in ortho position with respect to each other, R is a hydrogen atom or a monovalent hydrocarbon radical, and number n represents the average polycondensation degree of said poly(benzhydrolimide) chains.

2. A polymer composition according to claim 1, characterized in that R is a hydrogen atom, a phenyl radical or an alkyl radical of 1-4 carbon atoms,

3. A polymer composition according to one of claims 1 and 2, characterized by a polycondensation degree corresponding to an average number molecular weight from 1000 to 10000.

4. A process for preparing a polymer composition according to one of claims 1 to 3, characterized by the reaction, under imidation conditions, of at least one primary aromatic diamine of the general formula $NH_2$-Ar-$NH_2$ with at least one tetracarboxylic aromatic compound of general formula

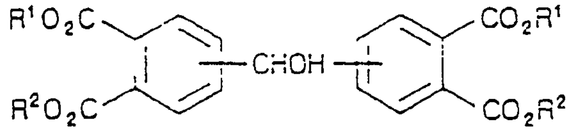

wherein $R^1$ and $R^2$, identical or different, are each a hydrogen atom or a monoyalent hydrocarbon radical and at least one dicarboxylic cycloaliphatic compound with ethylenic unsaturation, complying with one of the general formulas

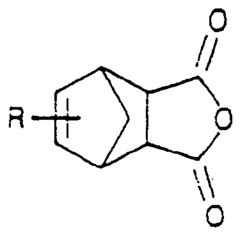

and

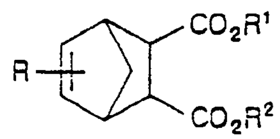

wherein $R^1$ and $R^2$ are defined as above, Ar and R being defined as in one of claims 1 and 2.

5. A process according to claim 4, wherein each of $R^1$ and $R^2$ is a hydrogen atom, characterized in that said tetracarboxylic aromatic compound is benzhydrol 3,3'.4,4'-tetracarboxylic acid.

6. A process according to claim 4, wherein $R^1$ is hydrogen and $R^2$ a monovalent hydrocarbon radical having 1 to 13 carbon atoms, characterized in that the tetracarboxylic aromatic compound is at least one bis(ortho-acid-ester) of benzhydrol 3,3'.4,4'.-tetracarboxyxylic acid.

7. A process according to claim 4, wherein each of $R^1$ and $R^2$ is a monovalent hydrocarbon radical having 1 to 13 carbon atoms, characterized in that said tetracarboxylic aromatic compound is at least one tetraester of benzhydrol 3,3'.4,4'-tetracarboxylic acid.

8. A process according to one of claims 4 to 7, characterized in that the dicarboxylic cycloaliphatic compound with ethylenic unsaturation, represented by formula

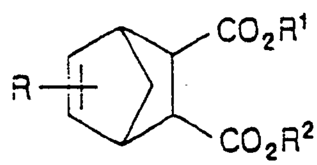

is at least one acid-ester. $R^1$ being the hydrogen atom and $R^2$ a monovalent hydrocarbon radical having 1-13 carbon atoms.

9. A process according to one of claims 4 to 7, characterized in that the dicarboxylic cycloaliphatic compound with ethylenic unsaturation of formula

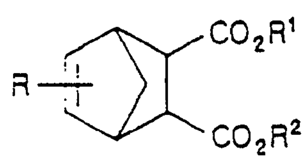

is at least one diester, each of $R^1$ and $R^2$ being a monovalent radical of substantial hydrocarbon content having 1 to 13 carbon atoms.

10. A method for cross-linking a composition according to one of claims 1 to 3, characterized in that said composition is subjected to thermal polymerization at a temperature from 200 to 350°C.

11. The use of a polymer composition according to one of claims 1 to 3 in the manufacture of composite materials, adhesives, molded articles and protective coatings.